# EUROPÄISCHE PATENTSCHRIFT

(11) **EP 0 604 843 B1**
(45) Veröffentlichungstag und Bekanntmachung des Hinweises auf die Patenterteilung: **25.09.1996**
(21) Anmeldenummer: 93120270.9
(22) Anmeldetag: 16.12.1993
(51) Int. Cl.: C08L 33/06, C08L 25/12, C08L 51/04

(54) **Transparente, schlagzähe Formmassen**
Transparent and impact-resistant moulding compounds
Masses à mouler transparentes et résistant aux chocs

(30) Priorität: 30.12.1992 DE 4244510
(43) Veröffentlichungstag der Anmeldung: 06.07.1994
(73) Patentinhaber: BASF Aktiengesellschaft, 67063 Ludwigshafen (DE)
(72) Erfinder: Deckers, Andreas, Dr., D-67063 Ludwigshafen (DE); Guentherberg, Norbert, Dr., D-67346 Speyer (DE); Tiefensee, Kristin, Dr., D-67368 Westheim (DE)

(56) Entgegenhaltungen:
- EP-A- 0 037 686
- EP-A- 0 062 223
- EP-A- 0 354 034
- DE-A- 4 114 589

## Beschreibung

Die vorliegende Erfindung betrifft transparente, schlagzähe Formmassen, enthaltend im wesentlichen
A) 5 bis 50 Gew.-% eines Polymerisates, erhältlich durch Polymerisation eines C₁-C₂₀-Alkylesters der Methacryl- oder Acrylsäure oder Mischungen solcher Ester,
B) 5 bis 50 Gew.-% eines Polymerisates, erhältlich durch Polymerisation eines Monomerengemisches aus
   b₁) 75 bis 82 Gew.-% eines vinylaromatischen Monomeren und
   b₂) 18 bis 25 Gew.-% Acrylnitril oder Methacrylnitril oder eine Mischung davon,
C) 10 bis 40 Gew.-% eines Polymerisates, enthaltend
   c₁) 10 bis 90 Gew.-% Einheiten der allgemeinen Formel I 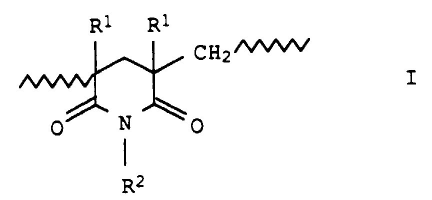 in der R¹ Wasserstoff oder C₁-C₄-Alkyl bedeutet, und R² für C₁-C₁₈-Alkyl, C₅-C₁₂-Cycloalkyl, C₆-C₁₀-Aryl oder C₆-C₁₀-Aryl-C₁-C₄-alkyl steht, wobei diese Reste, mit Ausnahme der C₁-C₄-Alkylgruppen, bis zu dreifach mit Resten ausgewählt aus der Gruppe, bestehend aus C₁-C₄-Alkyl, C₁-C₄-Alkoxy und Halogen, substituiert sein können,
   c₂) 10 bis 90 Gew.-% eines C₁-C₂₀-Alkylesters des Methacryl- oder Acrylsäure oder Mischungen solcher Ester,
D) 5 bis 60 Gew.-% eines Pfropfmischpolymerisates mit einem mittleren Teilchendurchmesser (Gewichtsmittel) von kleiner als 200 nm, erhältlich durch Polymerisation von 20 bis 70 Gew.-% einer Monomerenmischung aus
   d₁) 30 bis 100 Gew.-% eines C₁-C₂₀-Alkylesters der Methacryl- oder Acrylsäure oder Mischungen solcher Ester, und
   d₂) 0 bis 70 Gew.-% eines vinylaromatischen Monomeren in Gegenwart von 30 bis 80 Gew.-% einer Pfropfgrundlage, erhältlich durch Polymerisation mindestens eines Monomeren aus der Gruppe bestehend aus Butadien, Isopren, vinylaromatischen Monomeren und C₄-C₂₀-Alkylestern der Acrylsäure
   und
E) 0 bis 20 Gew.-%, bezogen auf die Menge der Komponenten A) bis D), üblicher Zusatzstoffe, wobei sich die Mengenangaben der Komponenten A) bis D) auf 100 addieren und die Differenz zwischen dem Brechungsindex der Komponente D) und dem des Gemisches aus den Komponenten A), B) und C) und gewünschtenfalls E) weniger als 0,01 beträgt.

Außerdem betrifft die Erfindung ein verfahren zur Herstellung dieser transparenten, schlagzähen Formmassen, ihre Verwendung zur Herstellung von Formkörpern sowie Formkörper, enthaltend diese transparenten Formmassen.

Transparente Mischungen aus Polymethylmethacrylat (PMMA), Styrol-Acrylnitril-Copolymer (SAN) und einem Pfropfkautschuk sind beispielsweise aus der EP 62.223 bekannt. Derartige Blends zeichnen sich durch eine gute Schlagzähigkeit bei gleichzeitiger Transparenz aus. Nachteilig bei diesen Formmassen ist allerdings die nicht ausreichende Wärmeformbeständigkeit.

Die Anhebung von Wärmeformbeständigkeiten von SAN-Copolymeren ist bekannt. In der EP 95.274 werden verträgliche und somit transparente Abmischungen aus SAN und einem methacrylimidhaltigen Polymer beschrieben. Die Zähmodifizierung mittels eines Pfropfkautschuks wird ebenfalls beansprucht; diese Massen verlieren aber in der Regel ihre Transparenz.

Die EP 216.505 beschreibt Formmassen auf der Basis SAN bzw. ABS (Acrylnitril-Butadien-Styrol-Copolmere) in Kombination mit einem Polyglutarimid. Auch hier führen die Abmischungen allerdings nicht zu einem Blend, der zur Herstellung optisch anspruchsvoller Formteile geeignet ist.

In der EP 216.505 werden ebenfalls Polymermischungen aus einem Polymethacrylimid (PMI) und PMMA beansprucht. Diese sind allerdings zweiphasig, d.h. sie besitzen zwei Glasübergangstemperaturen, und sind somit nicht transparent. Außerdem ist die Vicat-Temperatur nur geringfügig höher als im PMMA.

Aufgabe der vorliegenden Erfindung war es daher, transparente, schlagzähe Formmassen mit verbesserter Wärmbeformbeständigkeit bereitzustellen.

Demgemäß wurden die eingangs definierten transparenten, schlagzähen Formmassen gefunden.

Ferner wurde ein Verfahren zur Herstellung dieser transparenten, schlagzähen Formmassen, deren Verwendung zur Herstellung von Formkörpern sowie Formkörper, enthaltend diese transparenten, schlagzähen Fommassen, gefunden.

Die als Komponente A) enthaltenden Polymerisate sind erfindungsgemäß erhältlich durch Polymerisation eines C₁-C₂₀-Alkylesters der Methacryl- oder Acrylsäure oder Mischungen solcher Ester, vorzugsweise durch Polymerisation eines Monomerengemisches, bestehend aus
a₁) 80 bis 100 Gew.-%, bevorzugt 90 bis 99 Gew.-%, eines C₁-C₂₀-Alkylesters der Methacrylsäure, und
a₂) 0 bis 20 Gew.-%, bevorzugt 1 bis 10 Gew.-%, eines C₁-C₂₀-Alkylesters der Acrylsäure.

Als C₁-C₂₀-Alkylester der Methacrylsäure kommen bevorzugt die C₁-C₄-Alkylester wie Methylmethacrylat ("MMA"), Ethylmethacrylat, n-, i-Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomere.

Als C₁-C₂₀-Alkylester der Acrylsäure verwendet man bevorzugt die C₁-C₄-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als besonders vorteilhaft haben sich nach den bisherigen Beobachtungen Polymerisate aus 99 Gew.-% Methylmethacrylat und 1 Gew.-% Methylacrylat mit einem Molekulargewicht (Gewichtsmittelwert M_{w}) von 60.000 bis 300.000 g/mol, insbesondere 80.000 bis 150.000 g/mol, sowie Polymerisate aus 96 Gew.-% Methylmethacrylat und 4 Gew.-% Butylacrylat mit einem Molekulargewicht (Gewichtsmittelwert M_{w}) von 60.000 bis 300.000 g/mol, insbesondere 110.000 g/mol, erwiesen.

Die Menge der Komponente A, bezogen auf das Gesamtgewicht der transparenten, schlagzähen Formmassen, beträgt erfindungsgemäß 5 bis 50, bevorzugt 15 bis 30 Gew.-%.

Die Herstellung der Komponente A) führt man im allgemeinen nach bekannten Polymerisationsverfahren wie Masse-, Lösungs-, Emulsions- oder Perlpolymerisation durch. Solche Verfahren sind beispielsweise im Kunststoffhandbuch, Bd. 9, Vieweg und Esser: Polymethylmethacrylat, Carl-Hanser-Verlag, München, 1975, S. 36 ff beschrieben.

Die als Komponente B) enthaltenen Copolymerisate (SAN-Copolymere) sind erhältlich durch Polymerisation eines Monomerengemisches aus
- 75 bis 82 Gew.-%,: vorzugsweise 78 bis 81 Gew.-%, eines vinylaromatischen Monomeren, und
- 18 bis 25 Gew.-%,: vorzugsweise 19 bis 22 Gew.-%, Acrylnitril oder Methacrylnitril oder deren Mischungen.

Außerhalb dieses Bereiches der Zusammensetzung erhält man in der Regel bei Verarbeitungstemperaturen über 240°C trübe Formteile, die Bindenähte aufweisen.

Als vinylaromatische Monomere eignen sich vorzugsweise Styrol, α-Methylstyrol, tert.-Butylstyrol, Monochlorstyrol und Vinyltoluol, besonders bevorzugt Styrol und α-Methylstyrol.

Der Zusatz von Acrylnitril und/oder Methacrylnitril bewirkt in der Regel eine Erhöhung der Spannungsrißbeständigkeit.

Als besonders geeignet haben sich SAN-Copolymere mit einem Molekulargewicht (Gewichtsmittelwert M_{w}) von 60 000 bis 300 000 g/mol, vorzugsweise von 100.000 bis 200.000 g/mol, erwiesen, die nach dem in der GB-PS 14 72 195 beschriebenen Verfahren hergestellt wurden.

Die Menge der Komponente B), bezogen auf das Gesamtgewicht der transparenten, schlagzähen Formmassen, beträgt erfindungsgemäß 5 bis 50, bevorzugt 15 bis 40 Gew.-%.

Die Herstellung der Komponente B) führt man in der Regel nach bekannten Polymerisationsverfahren wie Masse-, Lösungs-, Emulsions- oder Perlpolymerisation durch. Solche Verfahren sind beispielsweise in Kunststoffhandbuch, Hrsg. Vieweg und Daumiller, Band V; Polystyrol, Carl-Hauser-Verlag, München 1969, S. 124 ff. und in der GB-PS 14 72 195 beschrieben.

Die als Komponente C) enthaltenen Polymerisate enthalten erfindungsgemäß
C₁) 10 bis 90 Gew.-%, bevorzugt 50 bis 90 Gew.-%, Einheiten der allgemeinen Formel I 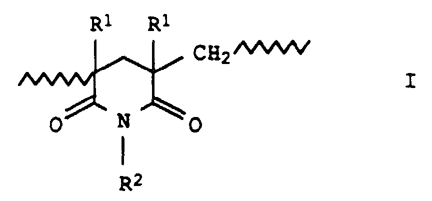 in der R¹ Wasserstoff oder C₁-C₄-Alkyl bedeutet, und R² für C₁-C₄-Alkyl, C₅-C₈-Cycloalkyl, C₆-C₁₀-Aryl oder C₆-C₁₀-Aryl-C₁-C₄-alkyl steht, wobei diese Reste, mit Ausnahme der C₁-C₄-Alkylgruppen, bis zu dreifach mit Resten ausgewählt aus der Gruppe, bestehend aus C₁-C₄-Alkyl, C₁-C₄-Alkoxy und Halogen, substituiert sein können,
   und
C₂) 90 bis 10 Gew.-%, bevorzugt 50 bis 10 Gew.-%, eines C₁-C₂₀-Alkylesters der Methacryl- oder Acrylsäure oder Mischungen solcher Ester.

Die Herstellung der Komponente C) erfolgt im allgemeinen durch Imidierung von Polymerisaten auf Basis von C₁-C₂₀-Alkylestern der Methacryl- oder Acrylsäure, oder Mischungen solcher Ester, mit primären Aminen.

Unter den Polymerisaten auf Basis von C₁-C₂₀-Alkylestern der (Meth)Acrylsäure sind sowohl Homo- als auch Copolymere zu verstehen, wobei die Copolymeren noch andere ethylenisch ungesättigte Comonomere enthalten können.

Als C₁-C₂₀-Alkylester der Methacrylsäure kommen bevorzugt die C₁-C₄-Alkylester wie Methylmethacrylat ("MMA"), Ethylmethacrylat, n-, i-Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als C₁-C₂₀-Alkylester der Acrylsäure verwendet man bevorzugt die C₁-C₄-Alkylester wie Methylacrylat ("MA''), Ethylacrylat, n-, i-Propylacrylat, n-Butylacrylat, Isobutylacrylat und tert.-Butylacrylat, wobei Methylacrylat besonders bevorzugt ist, sowie Mischungen dieser Monomeren.

Im allgemeinen sind die Polymerisate zu mehr als 50, bevorzugt zu mehr als 80 Gew.-% aus C₁-C₂₀-Alkylestern der Methacrylsäure und Acrylsäure aufgebaut. Als besonders vorteilhaft haben sich nach bisherigen Beobachtungen Polymerisate aus 80 bis 100 Gew.-% Methylmethacrylat und 0 bis 20 Gew.-% Methylacrylat in einem Molekulargewichtsbereich (M_{w}) von 20.000 bis 300.000 g/mol erwiesen.

Als primäres Amin, R²NH₂, verwendet man im allgemeinen eines ausgewählt aus der Gruppe bestehend aus C₁-C₁₈-Alkylaminen, C₅-C₁₂-Cycloalkylaminen, C₆-C₁₀-Arylaminen und C₆-C₁₀-Aryl-C₁-C₄-alkylaminen, wobei die Cycloalkyl-, Aryl- und Arylalkyl-Bestandteile der Amine bis zu dreifach mit Resten ausgewählt aus der Gruppe bestehend aus C₁-C₄-Alkyl, C₁-C₄-Alkoxy und Halogen wie Fluor, Chlor und Brom substituiert sein können.

Beispielhaft seien genannt Methylamin, Ethylamin, n-, i-Propylamin, n-Butylamin, 1-Methylpropylamin, 2-Methylpropylamin, 1,1-Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n-Octylamin, n-Nonylamin, n-Decylamin, n-Undecylamin, n-Dodecylamin, Stearylamin, Cyclopentylamin, Cyclohexylamin, Cycloheptylamin, Cyclooctylamin, Cyclododecylamin, Anilin, 2-, 3-, 4-Methylanilin, 2-, 3-, 4-Methoxyanilin, 2-, 3-, 4-Chloranilin, 2-, 3-, 4-Bromanilin, Benzylamin, Phenethylamin und Phenylpropylamin, besonders bevorzugt Methylamin und Cyclohexylamin.

Das Gewichtsverhältnis von eingesetztem Amin zu Acrylat-Polymer wählt man im allgemeinen im Bereich von 10:1 bis 1:1, bevorzugt von 2:1 bis 1:1, so daß der Gehalt an imidierten Einheiten I 10 bis 90 Gew.-% der Komponente C) beträgt. Im übrigen kann man den Imidierungsgrad durch die üblichen Verfahrensparameter, z.B. die Temperatur beeinflussen.

Die Imidierung führt man im allgemeinen in an sich bekannter Weise, z.B. in Gegenwart von Lösungsmitteln wie in der EP-A 234,726 beschrieben, oder ohne zusätzliches Lösungsmittel wie in der US 4.246.374 auf einem Extruder durch. Besonders bevorzugt ist die Herstellung der Komponente C) auf einem Extruder, dessen Reaktionszone ein Länge-zu-Durchmesser(L/D)-Verhältnis von 20 bis 50, bevorzugt von 30 bis 40, aufweist. Bei einem L/D-Verhältnis von mehr als 50 kommt es in der Regel aufgrund einer zu langen Verweilzeit zu einer Schädigung des Materials verbunden mit einer Gelbfärbung. Bei einem L/D-Verhältnis unter 20 erhält man im allgemeinen nur ein teilimidiertes Produkt mit einem hohen Anteil an sekundären Amid-Gruppen, die sich nachteilig auf die Schmelzviskosität und Wasseraufnahme auswirken.

Als Mischelemente kann man übliche Elemente wie Knetblöcke oder Zahnmischelemente zur Homogenisierung des Reaktionsgemisches verwenden.

Die Reaktionstemperatur wählt man in der Regel im Bereich von 250 bis 350, bevorzugt von 270 bis 350°C.

Die Wahl des pH-Bereiches liegt wegen des eingesetzten Amins in der Regel oberhalb von 7.

Die Reaktionszeit liegt beim Mischen in einem Extruder vorzugsweise im Bereich von 1 bis 20 min, bevorzugt 2 bis 10 min, in der Lösung darüber, bevorzugt von 2 bis 20 h.

Des weiteren kann man dem Reaktionsgemisch Katalysatoren in Mengen im Bereich von 0,01 bis 10 Gew.-%, bezogen auf das eingesetzte Polymer, zur Beschleunigung der Reaktion zusetzen. Beispielhaft seien genannt
tertiäre Amine wie Tricyclohexylamin;
substituierte Guanidine wie 1,1,3,3-Tetramethylguanidin, 1,3-Diphenylguanidin;
tetrasubstituierte Alkylammoniumverbindungen wie Trimethylstearylammoniumchlorid;
organische Titanverbindungen wie Tetrapropoxytitan, Tetrabutoxytitan:
organische Zinnverbindungen wie Dibutylzinnoxid, Dibutylzinndidodecanat;
aromatische Amine wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl;
Imide wie N,N'-Dicyclohexylcarbodiimid;
sowie Antimontrioxid, Zinndioxid, Natriumamid, Natrium- und Kaliumalkoholate wie Natrium- und Kaliummethanolat, Ammoniumchlorid und Ammoniumiodid.

Die Zugabe der Katalysatoren kann vor, während oder nach dem Mischvorgang erfolgen, bevorzugt danach.

In einer weiteren bevorzugten Ausführungsform enthält der (Haupt-)Extruder nach der Reaktionszone eine Entgasungszone, d.h. wenigstens eine Öffnung, durch die flüchtige Bestandteile und nicht polymere Reaktionsprodukte entfernt werden können. Die Entgasung kann man sowohl bei Normaldruck als auch unter vermindertem Druck (Vakuumentgasung) durchführen. Besonders vorteilhaft hat sich die Anwendung von einer Normaldruck- kombiniert mit einer Vakuumentgasung herausgestellt.

Als besonders vorteilhaft haben sich teilimidierte Polymerisate erwiesen, die ein Molekulargewicht (Gewichtsmittelwert M_{w}) von 60.000 bis 300.000 g/mol, vorzugsweise 100.000 bis 200.000 g/mol, gemessen in Dimethylformamid durch Lichtstreuung, aufweisen. Besonders bevorzugte Komponenten C) sind solche mit einer Säurezahl von höchstens 0,4 meq/g, insbesondere von 0,01 bis 0,2 meq/g.

Die Menge der Komponente C), bezogen auf das Gesamtgewicht der transparenten, schlagzähen Formmassen, beträgt erfindungsgemäß 10 bis 40 Gew.-%, vorzugsweise 10 bis 30 Gew.-%.

Die als Komponente D) enthaltenen Pfropfmischpolymerisate mit einem mittleren Teilchendurchmesser (Gewichtsmittel) von kleiner als 200 nm sind erhältlich durch Polymerisation von 20 bis 70 Gew.-% , bevorzugt von 30 bis 60 Gew.-% einer Monomerenmischung aus
- 30 bis 100 Gew.-% ,: vorzugsweise 40 bis 90 Gew.-% , eines C₁-C₂₀-Alkylesters der Methacryl- oder Acrylsäure oder Mischungen solcher Ester, und
- 0 bis 70 Gew.-% ,: vorzugsweise 10 bis 60 Gew.-% eines vinylaromatischen Monomeren
in Gegenwart von 30 bis 80 Gew.-% , vorzugsweise 40 bis 70 Gew.-% , einer Pfropfgrundlage, erhältlich durch Polymerisation mindestens eines Monomeren aus der Gruppe, bestehend aus Butadien, Isopren, vinylaromatischen Monomeren und C₄-C₂₀-Alkylestern der Acrylsäure.

Als C₁-C₂₀-Alkylester der Methacrylsäure kommen bevorzugt die C₁-C₄-Alkylester wie Methylmethacrylat ("MMA"), Ethylmethacrylat, n-, i-Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als C₁-C₂₀-Alkylester der Acrylsäure verwendet man bevorzugt die C₁-C₄-Alkylester wie Methylacrylat ("MA"), Ethylacrylat, n-, i-Propylacrylat, n-Butylacrylat, Isobutylacrylat und tert.-Butylacrylat, wobei Methylacrylat besonders bevorzugt ist, sowie Mischungen dieser Monomeren.

Als vinylaromatische Monomere eignen sich vorzugsweise Styrol, α-Methylstyrol, tert.-Butylstyrol, Monochlorstyrol und Vinyltoluol, besonders bevorzugt Styrol und α-Methylstyrol.

Als C₄-C₂₀-Alkylester der Acrylsäure als Bestandteil der Pfropfgrundlage verwendet man vorzugsweise C₄-C₈-Alkylester wie n-Butylacrylat, Isobutylacrylat, tert.-Butylacrylat, n-Pentylacrylat, n-Hexylacrylat, n-Heptylacrylat, n-Octylacrylat, 2-Ethyl-hexylacrylat, wobei n-Butylacrylat und 2-Ethyl-hexylacrylat besonders bevorzugt sind, sowie Mischungen dieser Monomeren.

Als Pfropfgrundlage haben sich nach den bisherigen Beobachtungen Polymerisate aus 50 bis 100 Gew.-%, insbesondere 60 bis 80 Gew.-%, Butadien und 0 bis 50 Gew.-%, insbesondere 20 bis 40 Gew.-%, Styrol besonders bewährt.

Als Pfropfhülle haben sich nach den bisherigen Beobachtungen Polymerisate aus 10 bis 100 Gew.-% Methylmethacrylat, 0 bis 20 Gew.-%, bevorzugt von 1 bis 10 Gew.-%, eines C₁-C₄-Alkylesters der Acrylsäure, insbesondere n-Butylacrylat, und von 0 bis 70 Gew.-%, bevorzugt von 1 bis 60, besonders bevorzugt von 10 bis 55 Gew.-%, Styrol besonders bewährt.

Bei Verwendung von mehr als einem Monomeren in der Pfropfhülle kann ein schalenförmiger Aufbau von Vorteil sein. Dies wird erzielt, indem man die verschiedenen Monomeren bzw. Monomermischungen jeweils nach der Polymerisation der Monomeren einer Schale zugibt.

Vorteilhaft weist die Komponente D) eine Glasübergangstemperatur von unter 0°C auf. Des weiteren liegt die mittlere Teilchengröße erfindungsgemäß im Bereich von 0,05 bis 0,2, vorzugsweise von 0,08 bis 0,2 µm. Nach den bisherigen Beobachtungen erhält man außerhalb des erfindungsgemäßen Teilchengrößenbereiches keine transparenten Formmassen.

Die Herstellung des Pfropfmischpolymerisates (Komponente D)) führt man im allgemeinen in üblicher Weise durch Emulsionspolymerisation, wie sie beispielsweise in DE-OS 14 20 775 und GB-PS 649 166 beschrieben ist, durch. Nach der Herstellung isoliert man die Komponente D) im allgemeinen durch bekannte Methoden wie Koagulation oder Sprühtrocknung.

Die Menge der Komponente D), bezogen auf das Gesamtgewicht der transparenten, schlagzähen Formmassen, beträgt erfindungsgemäß 5 bis 60 Gew.-%, vorzugsweise 20 bis 50 Gew.-%.

Erfindungsgemäß beträgt die Differenz zwischen dem Brechungsindex der Komponente D) und dem des Gemisches aus den Komponenten A), B) und C) und gewünschtenfalls E) weniger als 0,01. Andernfalls erhält man nach den bisherigen Beobachtungen keine transparenten Formmassen.

Die erfindungsgemäße Anpassung der Brechungsindices geschieht dadurch, daß man die Zusammensetzung (Monomerenanteile) der Komponenten A), B) und C) einerseits und D) andererseits entsprechend wählt. Dabei geht man in der Regel so vor, daß der Brechungsindex der jeweiligen Homopolymeren den benötigten Monomerenverhältnissen der Copolymeren zugrundegelegt wird. Z.B. hat der Brechungsindex eines Styrol/Butadien-Copolymerisats jeweils den Zwischenwert, der sich aus dem Gewichtsbruch der Monomerenanteile von Styrol und Butadien ergibt, wenn n²⁵_{D} für Polystyrol zu 1.59 - 1.60 und für Polybutadien zu 1.516 angenommen wird (vgl. Brandrup-Immergut, Polymer Handbook, 2. Aufl. New York 1987).

Die erfindungsgemäßen Formmassen können, bezogen auf das Gemisch der Komponenten A) bis D), noch bis zu 20 Gew.-% üblicher Zusatzstoffe enthalten. Als solche kommen beispielsweise in Betracht:
Farbstoffe:
Oxidationsverzögerer und Wärmestabilisatoren wie sterisch gehinderte Phenole, Phosphite und Abkömmlinge und substituierte Vertreter dieser Gruppe und Mischungen dieser Verbindungen, vorzugsweise in Konzentrationen bis zu 1 Gew.-%, bezogen auf das Gewicht der Mischung;
UV-Stabilisatoren wie substituierte Salicylate, Benzotriazole und Benzophenone sowie HALS (hindered amine light stabilizers)-Verbindungen wie die in der EP-A 243 319 genannten Bernsteinsäureester oder Glutarsäureester des 2,2,6,6-Tetramethylpiperidinol-4 sowie Bis-(2,2,6,6-tetramethyl-4-piperidyl)sebazat, die man im allgemeinen in Mengen bis zu 1 Gew.-% einsetzen kann;
Gleit- und Entformungsmittel, die man in der Regel bis zu 3 Gew.-% der thermoplastischen Masse zusetzen kann, beispielsweise Stearinsäure, Stearate, Stearylalkohol, Stearinsäurealkylester und -amide sowie Ester des Pentaerythrits mit langkettigen Fettsäuren
und Antistatika.

Das Vermischen der Komponenten A) bis D) bzw. E) kann in der Regel in den üblichen Vorrichtungen zur Schmelzvermischung wie Doppelschneckenextruder durchgeführt werden. Die Komponenten werden hierbei im allgemeinen bei Temperaturen im Bereich von 200 bis 300°C, verarbeitet. Prinzipiell ist es auch möglich, Lösungen oder Suspensionen der erfindungsgemäßen Komponenten zu vermischen und das Lösungs- oder Suspensionsmittel anschließend zu entfernen.

Die Verarbeitungsbreite der erfindungsgemäßen, transparenten, schlagzähen Formmassen oberhalb 200°C ist nach den bisherigen Beobachtungen nicht durch Unverträglichkeitserscheinungen eingeschränkt. Die Mischungen der Komponenten A) bis D) bzw. E) kann man zwischen 200 und 300°C ohne Einbußen in der Transparenz, ohne merkbare Vergilbung und ohne eine lästige Geruchsbildung verarbeiten.

Aus den erfindungsgemäßen Formmassen kann man durch Spritzgießen oder Blasformen Formkörper herstellen. Man kann die Formmassen auch verpressen, kalandrieren, extrudieren oder vakuumformen.

Die erfindungsgemäßen transparenten, schlagzähen Formmassen weisen gegenüber solchen aus dem Stand der Technik eine sehr gute Transparenz und eine verbesserte Wärmeformbeständigkeit auf.

Im Spritzguß verarbeitete Formteile zeigen nach den bisherigen Beobachtungen keinerlei Bindenahtmarkierungen und zeichnen sich durch eine hohe Transparenz und einen hohen Oberflächenglanz aus.

### Beispiele

Bei den mittleren Teilchengrößen handelt es sich in allen Fällen um das Gewichtsmittel der Teilchengrößen, die mittels einer analytischen Ultrazentrifuge entsprechend der Methode von W. Scholtan und H. Lange, Kolloid-Z. und Z.Polymere 250 (1972), Seiten 782 bis 796, bestimmt werden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert.

Für die nachstehenden Beispiele und Vergleichsbeispiele wurden folgende Bestandteile eingesetzt:

Verwendete Komponenten:
A₁:Copolymerisat aus 96 Gew.-Tl. Methylmethacrylat (MMA) und 4 Gew.-Tl. n-Butylacrylat, M_{w} = 110.000 (bestimmt durch Gelpermeationschromatographie (GPC) in Tetrahydrofuran (THF) (n²⁵_{D} = 1,492)
A₂:Copolymerisat aus 99 Gew.-Tl. MMA und 1 Gew.-Tl. Methylacrylat, M_{w} = 110.000 (bestimmt durch GPC in THF) (n²⁵_{D} = 1,492)
B₁:Copolymerisat aus Styrol und Acrylnitril im Verhältnis 81 : 19 (n²⁵_{D} = 1,575), M_{w} = 250.000 (bestimmt durch LichtStreuung in CHCl₃)
C₁: Copolymerisat aus 87 Gew.-T1. I (R¹ = R² = CH₃;) und 13 Gew.- Tl. MMA; VZ = 70 (gemessen in Dimethylformamid (DMF) als 0,26 gew.-%ige Lösung), Säurezahl = 0,03 meq/g (n²⁵_{D} = 1,540)
C₂: Copolymerisat aus 74 Gew.-T1. I (R¹ = R² = CH₃;) und 26 Gew.-Tl. MMA; VZ = 82 (gemessen in DMF als 0,26 gew.-%ige Lösung), Säurezahl = 0,02 meq/g (n²⁵_{D} = 1,530)
D₁: Pfropfcopolymerisat von 45 Gew.-Tl. eines Gemisches aus 51 Gew.-Tl. MMA, 44 Gew.-Tl. Styrol und 5 Gew.-Tl. n-Butylacrylat auf 55 Gew.-Tl. einer elastomeren Grundstufe, bestehend aus 72 Gew.-Tl. Butadien und 28 Gew.-Tl. Styrol (n²⁵_{D} = 1,537); die mittlere Teilchengröße (Gewichtsmittel) wurde zu 130 nm ermittelt.

In der nachfolgenden Tabelle sind die Zusammensetzungen der Mischungen sowie die Ergebnisse der optischen Beurteilung und der mechanischen Eigenschaften angegeben:

Die Kerbschlagzähigkeit aK (Spritztemperatur: 250°C/Prüftemperatur: 23°C) wurde gemäß DIN 53 453 an Normkleinstäben bestimmt.

Die Wärmeformbeständigkeit Vicat B 50 wurde gemäß DIN 54 460 gemessen.

Der E-Modul wurde gemäß DIN 53 457 bestimmt.

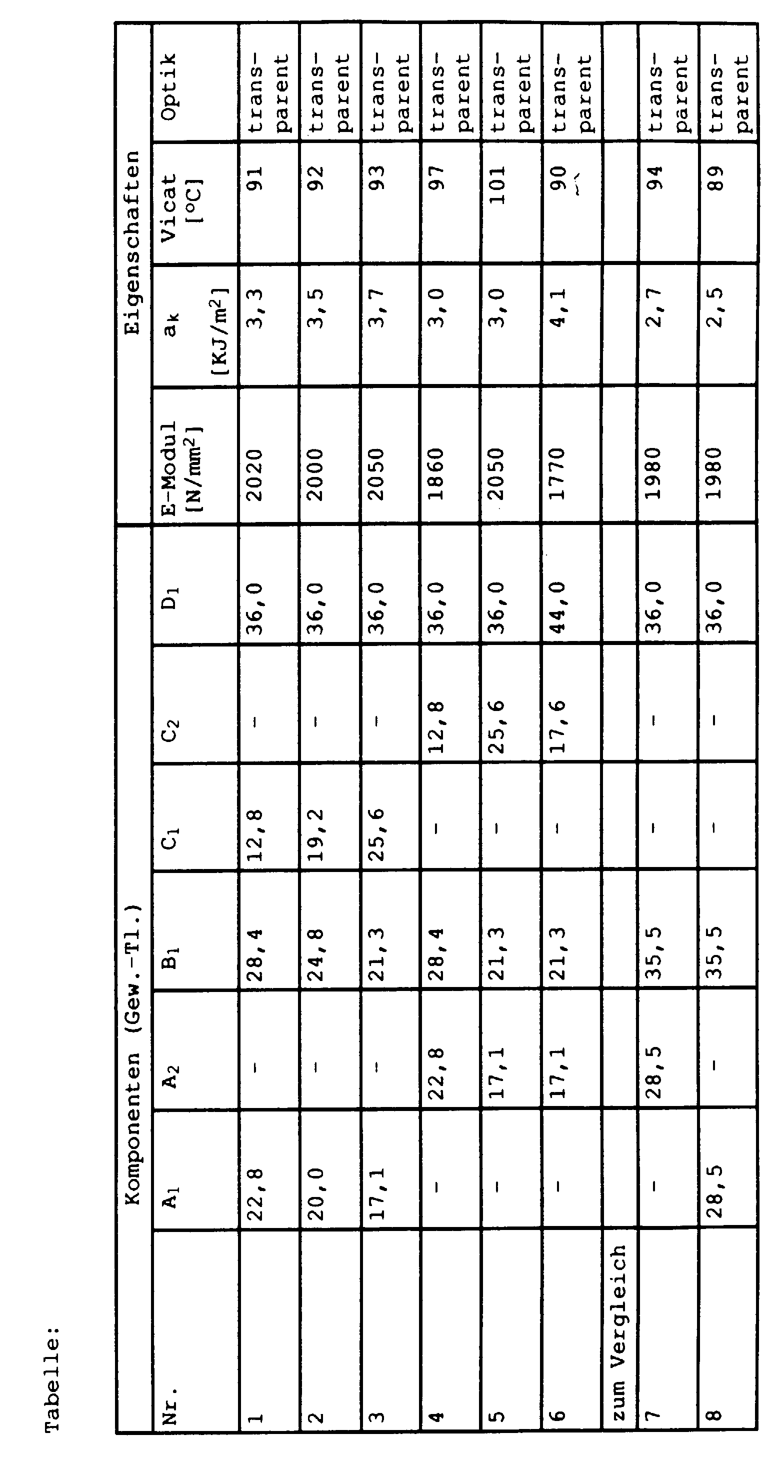

## Patentansprüche

1. Transparente, schlagzähe Formmassen, enthaltend im wesentlichen
A) 5 bis 50 Gew.-% eines Polymerisates, erhältlich durch Polymerisation eines C₁-C₂₀-Alkylesters der Methacryl- oder Acrylsäure oder Mischungen solcher Ester,
B) 5 bis 50 Gew.-% eines Polymerisates, erhältlich durch Polymerisation eines Monomerengemisches aus
b₁) 75 bis 82 Gew.-% eines vinylaromatischen Monomeren und
b₂) 18 bis 25 Gew.-% Acrylnitril oder Methacrylnitril oder eine Mischung davon,
C) 10 bis 40 Gew.-% eines Polymerisates, enthaltend
c₁) 10 bis 90 Gew.-% Einheiten der allgemeinen Formel I 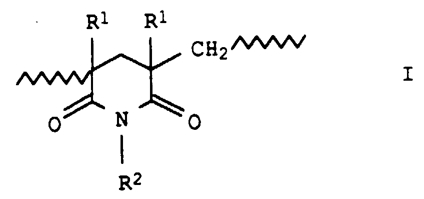 in der R¹ Wasserstoff oder C₁-C₄-Alkyl bedeutet, und R² für C₁-C₁₈-Alkyl, C₅-C₁₂-Cycloalkyl, C₆-C₁₀-Aryl oder C₆-C₁₀-Aryl-C₁-C₄-alkyl steht, wobei diese Reste, mit Ausnahme der C₁-C₄-Alkylgruppen, bis zu dreifach mit Resten ausgewählt aus der Gruppe, bestehend aus C₁-C₄-Alkyl, C₁-C₄-Alkoxy und Halogen, substituiert sein können,
c₂) 10 bis 90 Gew.-% eines C₁-C₂₀-Alkylesters des Methacryl- oder Acrylsäure oder Mischungen solcher Ester,
D) 5 bis 60 Gew.-% eines Pfropfmischpolymerisates mit einem mittleren Teilchendurchmesser (Gewichtsmittel) von kleiner als 200 nm, erhältlich durch Polymerisation von 20 bis 70 Gew.-% einer Monomerenmischung aus
d₁) 30 bis 100 Gew.-% eines C₁-C₂₀-Alkylesters der Methacryl- oder Acrylsäure oder Mischungen solcher Ester, und
d₂) 0 bis 70 Gew.-% eines vinylaromatischen Monomeren in Gegenwart von 30 bis 80 Gew.-% einer Pfropfgrundlage, erhältlich durch Polymerisation mindestens eines Monomeren aus der Gruppe bestehend aus Butadien, Isopren, vinylaromatischen Monomeren und C₄-C₂₀-Alkylestern der Acrylsäure
und
E) 0 bis 20 Gew.-%, bezogen auf die Menge der Komponenten A) bis D), üblicher Zusatzstoffe, wobei sich die Mengenangaben der Komponenten A) bis D) auf 100 addieren und die Differenz zwischen dem Brechungsindex der Komponente D) und dem des Gemisches aus den Komponenten A), B) und C) und gewünschtenfalls E) weniger als 0,01 beträgt.

2. Transparente, schlagzähe Formmassen nach Anspruch 1, dadurch gekennzeichnet, daß die Komponente A) aus einem Monomerengemisch aus
a₁) 80 bis 100 Gew.-% eines C₁-C₂₀-Alkylesters der Methacrylsäure, und
a₂) 0 bis 20 Gew.-% eines C₁-C₂₀-Alkylesters der Acrylsäure
hergestellt ist.

3. Transparente, schlagzähe Formmassen nach Anspruch 1 oder 2, dadurch gekennzeichnet, daß die Komponente C) eine Säurezahl von höchstens 0,4 meq/g aufweist.

4. Verfahren zur Herstellung von transparenten, schlagzähen Formmassen gemäß den Ansprüchen 1 bis 3, dadurch gekennzeichnet, daß man die Komponenten A) bis D) und gewünschtenfalls E) in der Schmelze mischt.

5. Verwendung der transparenten, schlagzähen Formmassen gemäß den Ansprüchen 1 bis 3 zur Herstellung von Formkörpern.

6. Formkörper, erhältlich aus den transparenten, schlagzähen Formmassen gemäß den Ansprüchen 1 bis 3.

## Claims

1. A transparent, impact-resistant molding material, containing essentially
A) from 5 to 50% by weight of a polymer obtainable by polymerizing a C₁-C₂₀-alkyl ester of methacrylic or acrylic acid or a mixture of such esters,
B) from 5 to 50% by weight of a polymer obtainable by polymerizing a monomer mixture of
b₁) from 75 to 82% by weight of a vinylaromatic monomer and
b₂) from 18 to 25% by weight of acrylonitrile or methacrylonitrile or a mixture thereof,
C) from 10 to 40% by weight of a polymer containing
c₁) from 10 to 90% by weight of units of the formula I 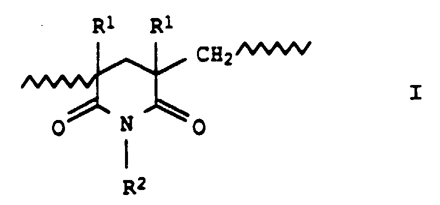 where R¹ is hydrogen or C₁-C₄-alkyl and R² is C₁-C₁₈-alkyl, C₅-C₁₂-cycloalkyl, C₆-C₁₀-aryl or C₆-C₁₀-aryl-C₁-C₄-alkyl, where these radicals, with the exception of the C₁-C₄-alkyl groups, may be monosubstituted to trisubstituted by radicals selected from the group consisting of C₁-C₄-alkyl, C₁-C₄-alkoxy and halogen, and
c₂) from 10 to 90% by weight of a C₁-C₂₀-alkyl ester of methacrylic or acrylic acid or a mixture of such esters,
D) from 5 to 60% by weight of a graft copolymer having a mean particle diameter (weight average) of less than 200 nm and obtainable by polymerizing from 20 to 70% by weight of a monomer mixture of
d₁) from 30 to 100% by weight of a C₁-C₂₀-alkyl ester of methacrylic or acrylic acid or a mixture of such esters and
d₂) from 0 to 70% by weight of a vinylaromatic monomer in the presence of from 30 to 80% by weight of a grafting base, obtainable by polymerizing at least one monomer selected from the group consisting of butadiene, isoprene, vinylaromatic monomers and C₄-C₂₀-alkyl esters of acrylic acid,
and
E) from 0 to 20% by weight, based on the amount of components A) to D), of conventional additives, the stated amounts of components A) to D) summing to 100 and the difference between the refractive index of component D) and that of the mixture of components A), B) and C) and, if desired, E) being less than 0.01.

2. A transparent, impact-resistant molding material as claimed in claim 1, wherein component A) is prepared from a monomer mixture comprising
a₁) from 80 to 100% by weight of a C₁-C₂₀-alkyl ester of methacrylic acid and
a₂) from 0 to 20% by weight of a C₁-C₂₀-alkyl ester of acrylic acid.

3. A transparent, impact-resistant molding material as claimed in claim 1 or 2, wherein component C) has an acid number of not more than 0.4 meq/g.

4. A process for the preparation of a transparent, impact-resistant molding material as claimed in any of claims 1 to 3, wherein components A) to D) and, if desired, E) are mixed in the melt.

5. Use of a transparent, impact-resistant molding material as claimed in any of claims 1 to 3 for the production of moldings.

6. A molding obtainable from the transparent, impact-resistant molding material as claimed in any of claims 1 to 3.

## Revendications

1. Masses à mouler résilientes et transparentes, contenant essentiellement
A) 5 à 50% en poids d'un polymère obtenu par polymérisation d'un ester alkylique en C₁-C₂₀ de l'acide méthacrylique ou acrylique, ou de mélanges de tels esters,
B) 5 à 50% en poids d'un polymère obtenu par polymérisation d'un mélange de monomères composé de
b₁) 75 à 82% en poids d'un monomère vinylaromatique et
b₂) 18 à 25% en poids d'acrylonitrile, de méthacrylonitrile ou d'un mélange de ceux-ci,
C) 10 à 40% en poids d'un polymère contenant
c₁) 10 à 90% en poids de motifs de formule générale I 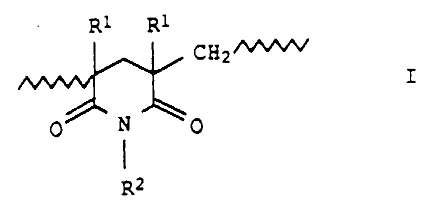 dans laquelle R¹ représente un atome d'hydrogène ou un reste alkyle en C₁-C₄ et R² est mis pour un reste alkyle en C₁-C₁₈, cycloalkyle en C₅-C₁₂, aryle en C₆-C₁₀ ou aryle en C₆-C₁₀-alkyle en C₁-C₄, ces restes, à l'exception des groupements alkyle en C₁-C₄, pouvant être substitués jusqu'à trois fois par des restes choisis dans le groupe constitué par les groupements alkyle en C₁-C₄, alcoxy en C₁-C₄ et les atomes d'halogène,
c₂) 10 à 90% en poids d'un ester alkylique en C₁-C₂₀ de l'acide méthacrylique ou acrylique, ou de mélanges de tels esters,
D) 5 à 60% en poids d'un copolymère greffé ayant un diamètre moyen de particules (moyenne en poids) de moins de 200 nm, obtenu par polymérisation de 20 à 70% en poids d'un mélange de monomères composé de
d₁) 30 à 100% en poids d'un ester alkylique en C₁-C₂₀ de l'acide méthacrylique ou acrylique ou de mélanges de tels esters, et
d₂) 0 à 70% en poids d'un monomère vinylaromatique,
en présence de 30 à 80% en poids d'un support de greffage obtenu par polymérisation d'au moins un monomère du groupe constitué par le butadiène, l'isoprène, des monomères vinylaromatiques et les esters alkyliques en C₄-C₂₀ de l'acide acrylique
et
E) 0 à 20% en poids, par rapport à la quantité des composants A) à D), d'additifs usuels,
les indications de quantité relatives aux composants A) à D) s'additionnant à 100 et la différence entre l'indice de réfraction du composant D) et celui du mélange des composants A), B), C) et éventuellement E) étant inférieure à 0,01.

2. Masses à mouler résilientes et transparentes selon la revendication 1, caractérisées en ce que le composant A) est préparé à partir d'un mélange de monomères composé de
a₁) 80 à 100% en poids d'un ester alkylique en C₁-C₂₀ de l'acide méthacrylique et
a₂) 0 à 20% en poids d'un ester alkylique en C₁-C₂₀ de l'acide acrylique.

3. Masses à mouler résilientes et transparentes selon la revendication 1 ou 2, caractérisées en ce que le composant C) présente un indice d'acide de 0,4 méq./g au maximum.

4. Procédé de préparation de masses à mouler résilientes et transparentes selon l'une quelconque des revendications 1 à 3, caractérisé en ce que l'on mélange à l'état fondu les composants A) à D) et éventuellement E).

5. Utilisation des masses à mouler résilientes et transparentes selon l'une quelconque des revendications 1 à 3 pour la fabrication de corps moulés.

6. Corps moulés, obtenus à partir des masses à mouler résilientes et transparentes selon l'une quelconque des revendications 1 à 3.
